# EUROPEAN PATENT APPLICATION

(11) **EP 0 747 439 A2**
(43) Date of publication of application: **11.12.1996**
(21) Application number: 96304234.6
(22) Date of filing: 06.06.1996
(51) Int. Cl.: C08L 71/12, C08L 77/00

(54) **Reinforced compositions of poly(phenylene ether) and polyamide resins**

(30) Priority: 07.06.1995 US 472800
(71) Applicant: GENERAL ELECTRIC COMPANY, Schenectady, NY 12345 (US)
(72) Inventor: Peters, Edward Norman, Lenox, Massachusetts 01240 (US)
(74) Representative: Szary, Anne Catherine

(57) **Abstract**

Improved thermoplastic compositions that have improved melt strength and blow ratio are described herein, comprising poly(phenylene ether) resins, polyamide resins and a platey mineral filler. The compositions may further comprise at least one impact modifier, flow promoter and/or at least one reinforcing filler.

## Description

This invention relates to reinforced poly(phenylene ether)polyamide compositions which exhibit enhanced properties, such as improved melt strength.

### Brief Description of the Related Art

Poly(phenylene ether) resins (referred to hereafter as "PPE") are commercially attractive materials because of their unique combination of physical, chemical, and electrical properties. Furthermore, the combination of these resins with polyamide resins into compatibilized blends results in additional overall properties such as chemical resistance, high strength and high flow. Examples of such compatibilized blends can be found in U.S. Patents 4,315,086 (Ueno, et al); 4,659,760 (van der Meer); and 4,732,938 (Grant, et al). The properties of these blends can be further enhanced by the addition of various additives such as impact modifiers, flame retardants, light stabilizers, processing stabilizers, heat stabilizers, antioxidants and fillers.

The physical properties of reinforced PPE/polyamide blends make them attractive for a variety of end-use articles in the automotive market, especially for under hood components. Many of these components are manufactured by processes such as blow molding or thermoforming. These part conversion techniques require that the material have a high melt strength in order to obtain a uniform wall thickness in the final part and to allow an economically feasible molding window cycle.

In many reinforced PPE/polyamide blends in which the reinforcing agent is, for example, glass fiber, the ability to blow out a molten parison into a desired shape is negatively affected by the glass fiber. Thus, for components that require an increase in stiffness over an unfilled blend and also require the desireable physical properties of the unfilled PPE/polyamide blend, glass fiber reinforced PPE/polyamide blends are unacceptable.

It is therefore apparent that a need exists for reinforced PPE-polyamide compositions that have improved stiffness and which do not substantially detract from other important properties, such as melt strength and blow ratio.

### SUMMARY OF THE INVENTION

The needs discussed above have been generally satisfied by the discovery of an improved thermoplastic composition which comprises:
a) a compatibilizing poly(phenylene ether) resin;
b) a polyamide resin; and
c) an amount of a reinforcing platey filler effective for providing a good blow ratio and an increased stiffness to the composition.

The description which follows provides further details regarding this invention.

### BRIEF DESCRIPTION OF THE DRAWINGS

Figure 1 is a photograph of a molded part depicting the poor surface appearance and poor edge definition of an 8% by weight glass fiber re-inforced PPE/polyamide composition.

Figure 2 is a photograph of a molded part depicting the excellent surface appearance and excellent edge definition of an 8% by weight of a platey filler (e.g., mica) re-inforced PPE/polyamide composition.

### DETAILED DESCRIPTION OF THE INVENTION

The PPE employed in the present invention are known polymers comprising a plurality of structural units of the formula (I): 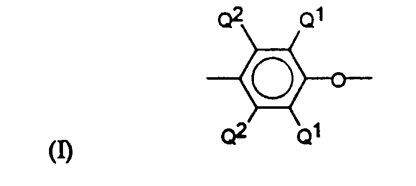 wherein each structural unit may be the same or may be different, and in each structural unit, each Q¹ is independently halogen, primary or secondary lower alkyl (i.e., alkyl containing up to 7 carbon atoms), phenyl, haloalkyl, aminoalkyl, hydrocarbonoxy, or halohydrocarbonoxy wherein at least two carbon atoms separate the halogen and oxygen atoms; and each Q² is independently hydrogen, halogen, primary or secondary lower alkyl, phenyl, haloalkyl, hydrocarbonoxy or halohydrocarbonoxy as defined for Q¹. Most often, each Q¹ is alkyl or phenyl, especially C₁₋₄ alkyl, and each Q² is hydrogen.

Both homopolymer and copolymer PPE are included. The preferred homopolymers are those containing 2,6-dimethyl-1,4-phenylene ether units. Suitable copolymers include random copolymers containing, for example, such units in combination with 2,3,6-trimethyl-1,4-phenylene ether units. Also included are PPE containing moieties prepared by grafting vinyl monomers or polymers such as polystyrenes and elastomers, as well as coupled PPE in which coupling agents such as low molecular weight polycarbonates, quinones, heterocycles and formals undergo reaction in known manner with the hydroxy groups of two PPE chains to produce a higher molecular weight polymer, provided a substantial proportion of free OH groups remains.

The PPE generally has a number average molecular weight within the range of about 3,000-40,000 and a weight average molecular weight within the range of about 20,000-80,000, as determined by gel permeation chromatography. Its intrinsic viscosity is most often in the range of about 0.15-0.6 dl./g., as measured in chloroform at 25°C.

The PPE are typically prepared by the oxidative coupling of at least one monohydroxyaromatic compound such as 2,6-xylenol or 2,3,6-trimethylphenol. Catalyst systems are generally employed for such coupling; they typically contain at least one heavy metal compound such as a copper, manganese or cobalt compound, usually in combination with various other materials.

Particularly useful PPE for many purposes are those which comprise molecules having at least one aminoalkyl-containing end group. The aminoalkyl radical is typically located in an ortho position to the hydroxy group. Products containing such end groups may be obtained by incorporating an appropriate primary or secondary monoamine such as di-n-butylamine or dimethylamine as one of the constituents of the oxidative coupling reaction mixture. Also frequently present are 4-hydroxybiphenyl end groups, typically obtained from reaction mixtures in which a by-product diphenoquinone is present, especially in a copper-halide-secondary or tertiary amine system. A substantial proportion of the polymer molecules, typically constituting as much as about 90% by weight of the polymer, may contain at least one of said aminoalkyl-containing and 4-hydroxybiphynyl end groups.

It will be apparent to those skilled in the art from the foregoing that the PPE contemplated for use in the present invention include all those presently known, irrespective of variations in structural units or ancillary chemical features.

The compositions of the present invention also contain a compatibilizer for the poly(phenylene ether) resin and the polyamide resin. Appropriate compatibilizers are those which affect the compatibility of the PPE with the various components of the blend. Compatibility is meant to include the minimization of gross phase separation between the components of the blend (i.e., the PPE and the polyamide). Indicators of improved compatibilization include, for example, increased tensile elongation, reduced delamination tendency, increased ductility and/or improved phase morphology stabilization. Improving the compatibilization between the blend components determines, in part, the desirable physical properties of the blend.

For some embodiments of the present invention, it is preferable for at least some of the PPE to be a "compatibilizing PPE." One way to prepare a compatibilizing PPE is to functionalize the PPE by reacting the PPE with at least one compound having both:
(i) a carbon-carbon double bond or a carbon-carbon triple bond and
(ii) a carboxylic acid, acid anhydride, acid amide, imido, carboxylic acid ester, epoxy, amino, hydroxyl or carboxylic acid ammonium salt.
These compounds are sometimes referred to as compatibilizers or functionalizers and the resultant PPE's are commonly referred to as compatibilizing PPE or functionalized PPE. Typical compounds used to accomplish the functionalization include: maleic anhydride, fumaric acid, maleimides such as N-phenylmaleimide and 1,4-phenylene-bis-methylene-α,α'-bismaleimide, maleic hydrazide, methylnadic anhydride, fatty oils (e.g., soybean oil, tung oil, linseed oil, sesame oil), unsaturated carboxylic acids such as acrylic, crotonic, methacrylic acid and oleic acid, unsaturated alcohols such as allyl alcohol and crotyl alcohol and unsaturated amines such as allylamine and trialkyl amine salts of unsaturated acids such as triethylammonium fumarate and tri-n-butylammonium fumarate. Such typical reagents for preparing a useful functionalized polyphenylene ether are described in U.S. Patent Nos. 4,315,086, 4,755,566, and 4,888,397, which are incorporated herein by reference.

Non-polymeric aliphatic polycarboxylic acids are also useful for preparing an appropriate compatibilizing PPE. Included in the group of species, also known as compatibilizers or functionalizers, are the aliphatic polycarboxylic acids, acid esters and acid amides represented by the formula (II):

(II) (R^{I}O)ₘR(COOR^{II})ₙ(CONR^{III}R^{IV})ₛ

wherein R is a linear or branched chain, saturated aliphatic hydrocarbon of from 2 to 20, preferably 2 to 10, carbon atoms; R^{I} is selected from the group consisting of hydrocarbon or an alkyl, aryl, acyl, or carbonyl dioxy group of 1 to 10, preferably 1 to 6, most preferably 1 to 4, carbon atoms, especially preferred is hydrogen; each R^{II} is independently selected from the group consisting of hydrogen or an alkyl or aryl group of from 1 to 20 carbon atoms preferably from 1 to 10 carbon atoms; each R^{III} and R^{IV} is independently selected from the group consisting essentially of hydrogen or an alkyl or aryl group of from 1 to 10, preferably from 1 to 6, most preferably 1 to 4, carbon atoms; m is equal to 1 and (n+s) is greater than or equal to 2, preferably equal to 2 or 3, and n and s are each greater than or equal to zero and wherein (OR^{I}) is alpha or beta to a carbonyl group and at least two carbonyl groups are separated by 2 to 6 carbon atoms. Obviously, R^{I}, R^{II}, R^{III} and R^{IV} cannot be aryl when the respective substituent has less than 6 carbon atoms.

Illustrative of suitable polycarboxylic acids are citric acid, malic acid, and agarcic acid; including the various commercial forms thereof, such as, for example, the anhydrous and hydrated acids. Illustrative of acid esters useful herein include, for example, acetyl citrate and mono- and/or di- stearyl citrates and the like. Suitable acid amides useful herein include for example N,N'- diethyl citric acid amide; N,N'-dipropyl citric acid amide; N-phenyl citric acid amide; N-dodecyl citric acid amide; N,N'-didodecyl citric acid amide and N-dodecyl malic acid amide. Derivatives of the foregoing polycarboxylic acids are also suitable for use in the practice of the present invention. Suitable functionalizing compounds can be found in U.S. Patent Nos. 4,315,086, 4,755,566 and 5,000,897, which are incorporated herein by reference.

The amount of the above mentioned compatibilizers that is required to appropriately functionalize the PPE is that which is sufficient to improve the compatibility between the various components in the composition. Indications of improved compatibility include resistance to delamination, improved physical properties such as increased tensile and/or impact properties and/or a stabilized morphology between the blend component phases under static or low shear conditions. It is thought that reactions can occur between some of the components of the composition, for example, between the compatibilizing PPE and the polyamide resin which results in the formation of PPE-nylon copolymers. It is believed that the PPE-nylon copolymers are in part responsible for many of the property changes which are observed in compositions containing a compatibilizer present in an effective amount when compared to the same composition not containing a compatibilizer or containing a compatibilizer in an amount which is not effective to improve the compatibility between the blend components. An effective amount of the above mentioned compatibilizers is generally up to about 8% by weight, and is preferably from about 0.05% to about 4% by weight; based on the amount of the PPE. In the most preferred embodiments, the amount of the compatibilizer is in the range of about 0.1% to about 3% by weight based on the amount of the PPE.

Another useful method for preparing an appropriate compatibilizing PPE resin involves reacting a PPE resin with a compound containing an acyl functional group. Non-limiting examples include chloroformyl succinic anhydride, chloroethanoyl succinic anhydride, trimellitic anhydride acid chloride, 1-acetoxy-acetyl-3,4-dibenzoic acid anhydride, and terephthalic acid acid chloride. Additional examples and methods to prepare such functionalized PPE can be found in U.S. Patent Nos. 4,600,741 and 4,642,358, each of which is incorporated herein by reference.

Various chloroepoxytriazine compounds are also useful for preparing an appropriate compatibilizing PPE resin. Illustrative compounds of this type include 2-chloro-4,6-diglycidoxy-1,3,5-triazine; 2-chloro-4-(n-butoxy)-6-glycidoxy-1,3,5-triazine; and 2-chloro-4-(2,4,6-trimethylphenoxy)-6-glycidoxy-1,3,5-triazine, also known as mesityl glycidyl chlorocyanurate (MGCC). Methods to prepare these compounds and functionalized PPE resins can be found in U.S. Patent Nos. 4,895,945, 5,041,504, 5,089,566 and 5,096,979, all of which are incorporated herein by reference.

Polyamides, also known as nylons, which can be used in the present invention include any polyamides and polyamide copolymers known in the art. Examples of such polyamides are those prepared by the polymerization of monomers selected from the following group:
(i) monoamino-monocarboxylic acids having at least 2 carbon atoms between the amino and carboxylic acid group;
(ii) cyclic or lactam structures of (i);
(iii) substantially equimolar proportions of a diamine which contains at least 2 carbon atoms between the amino groups and a dicarboxylic acid; and
(iv) various combinations of monoaminocarboxylic acids, lactams, diamines and dicarboxylic acids.

The term "substantially equimolar" proportions includes both strictly equimolar proportions and slight departures therefrom which are involved in conventional techniques for stabilizing the viscosity of the resultant polyamides. The balance of the monomer proportions can also be adjusted so as to control the acid to amine endgroup ratio. The dicarboxylic acid may be used in the form of a functional derivative thereof, for example, an ester or acid chloride.

Examples of the aforementioned monoamino monocarboxylic acids or lactams thereof which are useful in preparing the polyamides include those compounds containing from 2-16 carbon atoms between the amino and carboxylic acid groups, said carbon atoms forming a ring containing the -CO-NH- group in the case of lactam. As particular examples of monocarboxylic acids and lactams there may be mentioned ε-aminocaproic acid, butyrolactam, pivalolactam, ε-caprolactam, capryllactam, enentholactam, undecanolactam, dodecanolactam and 3- and 4- aminobenzoic acids.

Diamines suitable for use in the preparation of the polyamides include the straight chain and branched chain alkyl, aryl and alkaryl diamines. Illustrative diamines are trimethylenediamine, tetramethylenediamine, pentamethylenediamine, octamethylenediamine, hexamethylenediamine (which is often preferred), trimethylhexamethylenediamine, m-phenylenediamine and m-xylylenediamine. Monomers which have more than two amino groups can also be utilized to make various branched polyamide materials.

The dicarboxylic acids may be represented by the following formula (III): 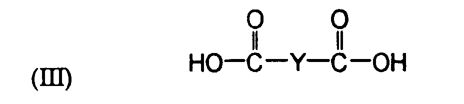 wherein Y is a divalent aliphatic or aromatic group containing at least 2 carbon atoms. Examples of aliphatic acids are sebacic acid, octadecanedioic acid, suberic acid, glutaric acid, pimelic acid and adipic acid. Monomers which have more than two carboxylic acid groups can also be utilized to make various branched polyamide materials.

Polyamides suitable for use in the present invention may be made by any known method. The polyamides can have linear or branched structures or be mixtures of linear and branched structures. They preferably contain a substantial proportion of amine end groups. Polyamides in which the amine end group concentration is at least about 40 meq./g. are particularly useful. In many instances, it is preferred that the amine to acid endgroup ratio to be about 1 or greater than 1. It is also within the scope of the invention, however, to employ predominantly carboxylic acid-terminated polyamides.

Both crystalline and amorphous polyamides may be employed, with the crystalline species often being preferred by reason of their solvent resistance. Typical examples of the polyamides include, for example, nylon-6 (polycaprolactam), nylon-6,6 (polyhexamethylene adipamide), nylon-11, nylon-12, nylon-6,3, nylon-6,4, nylon-6,10 and nylon-6,12 as well as polyamides from terephthalic acid and/or isophthalic acid and trimethylhexamethylenediamine; from adipic acid and m-xylylenediamines; from adipic acid, azelaic acid and 2,2 bis(p-aminophenyl)propane or 2,2-bis-(p-aminocyclohexyl)propane and from terephthalic acid and 4,4' diaminodicyclohexylmethane. Mixtures and/or copolymers of two or more of the foregoing polyamides or prepolymers thereof, respectively, are also within the scope of the present invention. Preferred polyamides are nylon-6, nylon-4,6, nylon-6,6, nylon-11 and nylon-12, most preferably nylon-6,6 and nylon-6.

The weight ratio of PPE to polyamide may vary from about 20:80 to about 80:20, with a ratio of about 40:60 to 60:40 being preferred.

The polymer mixture according to the present invention comprises as the third constituent a platey filler. Platey fillers include those fillers which generally have a substantial number of particles that have a diameter to thickness ratio in the range of about 3:1 to about 25:1, preferably, between about 5:1 to about 20:1. Substantial number means at least 50% of the particles, preferably at least 60% and most preferably at least 75% of the particles of filler have a platey structure. It is preferred that the average diameter of the platey filler be less than about 70 microns and preferably less than about 40 microns. When the average diameter to thickness ratio is substantially larger than the described range (i.e., more than about 25% of the particles are not platey), the filler is more fibrous -in nature than platey and anisotropic effects can be observed. When the particle diameter is substantially greater in size than the described range, the surface appearance and various physical properties such as, for example, ductility is adversely affected. Examples of useful platey fillers include talcs, micas, platey kaolins, glass flakes, calcium carbonates, calcium sulfates, wollastonites, and microfibers or whiskers. Preferable platey fillers include talcs and micas.

Various sizing or coupling agents can also be applied as surface treatments to the platey filler to effect certain desirable properties such as, for example, impact strength, tensile properties, aging characteristics and handling properties of the platey fillers. Included as sizing agents for the platey fillers are organosiloxanes and certain alkoxy titanates and zirconates.

The platey filler is generally used in an amount effective for providing a good blow ratio and an increased stiffness to the composition. The amount of the platey filler utilized may vary from about 2% to about 50% by weight based on the total weight of the composition. The preferred amount is generally between about 5% by weight and 20% by weight based on the weight of the total composition. The exact amount used will depend on the end-use requirements for the composition in the final molded part.

The compositions of the present invention may also contain at least one impact modifier. The preferred impact modifiers are block (typically diblock, triblock or radial teleblock) copolymers of alkenyl aromatic compounds and dienes. Most often at least one block is derived from styrene and at least one block from at least one of butadiene and isoprene. Especially preferred are the triblock and diblock copolymers comprising polystyrene blocks and diene derived blocks wherein the aliphatic unsaturation has been preferentially removed with hydrogenation. Mixtures of various copolymers are also sometimes useful. The weight average molecular weights of the impact modifiers are typically in the range of about 50,000 to 300,000. Block copolymers of this type are commercially available from Shell Chemical Company under the trademark KRATON, and include Kraton D1101, D1102, G1650, G1651, G1652, G1701 and G1702.

Another class of impact modifiers is derived from conjugated dienes. While copolymers containing conjugated dienes have been discussed above, additional conjugated diene modifier resins include, for example, homopolymers and copolymers of one or more conjugated dienes including, for example, polybutadiene, butadiene-styrene copolymers, isoprene-isobutylene copolymers, chlorobutadiene polymers, butadiene-acrylonitrile copolymers, polyisoprene, and the like. Ethylenepropylene-diene monomer rubbers (EPDM's) may also be used. They are typified as comprising predominantly ethylene units, a moderate amount of propylene units and up to about 20 mole percent of non-conjugated diene monomer units. The impact modifier may also contain reactive groups such as, for example, acid, oxazoline, ortho-ester, amino, epoxy, or anhydride.

The amount of the impact modifier generally present, when one is used, is in the range of about 1% to about 15% by weight based on the total weight of the composition. The preferred range is about 1% to about 10% and the most preferred range is about 3% to about 8% by weight; based on the total weight of the composition.

The compositions of the present invention may also contain a flow promoter, for example, at. least one polymer of an alkenylaromatic compound. Suitable polymers of this type may be prepared by methods known in the art including bulk, suspension and emulsion polymerization. They generally contain at least 25% by weight of structural units derived from an alkenylaromatic monomer of the formula (IV): 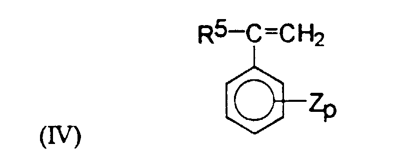 wherein R⁵ is hydrogen, lower alkyl or halogen; Z is vinyl, halogen or lower alkyl; and p is from 0 to 5. These resins include homopolymers of styrene, chlorostyrene and vinyltoluene, random copolymers of styrene with one or more monomers illustrated by acrylonitrile, butadiene, α-methylstyrene, ethylvinylbenzene, divinylbenzene and maleic anhydride, and rubber-modified polystyrenes comprising blends and grafts, wherein the rubber is a polybutadiene or a rubbery copolymer of about 98-78% styrene and about 2-32% diene monomer. These rubber modified polystyrenes include high impact polystyrene (commonly referred to as HIPS).

The amount of the flow promoter present, when one is used, is in the range of about 0.01% to about 20% by weight based on the total weight of the composition. The preferred range is about 0.01% to about 15% by weight and the most preferred range is about 0.1% to about 12% by weight; based on the total weight of the composition.

The PPE-polyamide blend may also conprise at least one fibrous material, in particular glass fibers. However, other fibrous reinforcing materials, e.g. carbon fibers, potassium titanate single-crystal fibers, gypsum fibers, aluminum oxide fibers or asbestos may also be incorporated. Glass fibers are generally made from low alkali E-glass, having a fiber diameter of from 8 to 14 µm, the length of the glass fibers in the finished injection molding being from 0.01 mm to 0.5 mm. The glass fibers may be employed as rovings or as chopped or milled glass fibers, and may be provided with a suitable finish and an adhesion promoter or promoter system based on silanes. The benefical effect from the platey filler is reduced when the amount of fibrous material is increased beyond about a 1:2 weight ratio of fibrous material to platey filler. When a fibrous material is used, preferably the weight ratio of fibrous material to platey filler remains at least about 1:3 fibrous material to platey filler. The amount of fibrous filler is advantageously used from about 2% to about 30% by weight, especially from about 5% to about 20% by weight; all based on the total weight of the composition.

Compositions of the present invention can also include effective amounts of at least one additive selected from the group consisting of flame retardants, drip retardants, dyes, pigments, colorants, stabilizers, antistatic agents, plasticizers and lubricants. These additives are known in the art, as are their effective levels and methods of incorporation. Effective amounts of the additives vary widely, but they are usually present in an amount from about 0.1% to 50% by weight, based on the weight of the entire composition.

PPE-polyamide blends can be prepared by a variety of methods involving intimate admixing of the materials with any additional additives desired in the formulation. Suitable procedures include solution blending and melt blending. Because of the availability of melt blending equipment in commercial polymer processing facilities, melt processing procedures are generally preferred. Examples of equipment used in such melt compounding methods include: co-rotating and counter-rotating extruders, disc-pack processors and various other types of extrusion equipment In some instances, the compounded material exits the extruder through small exit holes in a die and the resulting strands of molten resin are cooled by passing the strands through a water bath. The cooled strands can be chopped into small pellets for packaging and further handling.

All of the ingredients may be added initially to the processing system, or else certain additives may be precompounded with each other or with one of the primary polymer components, PPE and polyamide. It appears that certain properties, such as impact strength and elongation, are sometimes enhanced by initially precompounding the PPE with at least one of the typical agents used to functionalize PPE prior to blending with the polyamide. It also appears that some physical properties can also be enhanced by adding the mineral filler to the composition after at least some of the compatibilizing PPE and polyamide have been mixed. While separate extruders may be used in the processing, these compositions may also be prepared by using a single extruder having multiple feed ports along its length to accommodate the addition of the various components. It is also sometimes advantageous to employ at least one vent port in each section between the feed ports to allow venting (either atmospheric or vacuum) of the melt Those of ordinary skill in the art will be able to adjust blending times and temperatures, as well as component addition, without undue experimentation.

It should also be clear that improved molded articles prepared from the compositions of the present invention represent an additional embodiment of this invention.

The following examples are provided to illustrate some embodiments of the present invention. They are not intended to limit the invention in any aspect All percentages are by weight based on the total weight of the entire composition, unless otherwise indicated and all parts are parts by weight

### EXAMPLES

The compositions of Table 1 were extruded on a twin-screw extruder using a set temperature of about 600°F and a vacuum of 10-20 inches Hg applied to the melt during compounding. The resultant compositions were molded using an injection molding machine using a temperature set of about 600°F and a mold temperature of about 150°F. Samples of the compositions were also subjected to measurement of notched Izod impact strength according to ASTM D256 (employing a sample size of 2.5 inch by 0.5 inch by 0.125 inch), Dynatup strength (energy to fracture falling dart test) according to ASTM D3763 (using 4 inch diameter by 0.125 inch disks) and tensile yield and tensile elongation at break according to ASTM D638.

**Table 1**

| **sample:** | **1** | **2** | **3** | **4** | **5** |
|---|---|---|---|---|---|
| PPE | 44.34 | 44.34 | 45.28 | 45.28 | 48.68 |
| PA6 | 43.37 | 43.37 | 44.29 | 44.29 | 48.68 |
| SBS IM | 1.36 | 1.36 | 1.39 | 1.39 | 1.5 |
| citric acid | 0.54 | 0.54 | 0.59 | 0.59 | 0.6 |
| stabilizers | 0.44 | 0.44 | 0.44 | 0.44 | 0.44 |
| carbon black | 0.1 | 0.1 | 0.1 | 0.1 | 0.1 |
| glass fiber | 10 | 0 | 8.02 | 0 | 0 |
| mica | 0 | 10 | 0 | 8.02 | 0 |

| **Properties:** | | | | | |
|---|---|---|---|---|---|
| NI | 1.4 | 0.87 | 1.3 | 0.86 | 0.81 |
| Flexural str. | 18.3 | 17.6 | 18.2 | 17.6 | 16.6 |
| Flexural mod. | 534 | 495 | 520 | 489 | 390 |
| HDT | 400 | 385 | 398 | 381 | 380 |
| blow ratio | 3 | 1 | 3 | 1 | 3 |
| surface appearance | 3 | 1 | 3 | 1 | 1 |
| Flex. Mod @ 300°F | 199 | 160 | 183 | 153 | <150 |
| PPE is 0.46 I.V. poly(2,6-dimethylphenylene oxide); PA6 is nylon 6; SBS IM is KRATON D1101 ; stabilizers are 0.30 parts ANOX PP18, 0.1 parts potassium iodide, 0.018 parts cupric chloride, and 0.018 parts cupric acetate; NI is notched Izod in ft-lbs/in; Flexural str. is flexural strength in Kpsi; flexural mod. is flexural modulus in Kpsi; HDT is heat distortion temperature measured of a 1/4 inch thick bar measured at a load of 66 psi, reported in °F; blow ratio is the ability to blow out the molten parison and is described by 1 = excellent, 2 = good, 3 = poor (unacceptable); Surface appearance is 1 = excellent, 2 = good, 3 = poor (unacceptable). | | | | | |

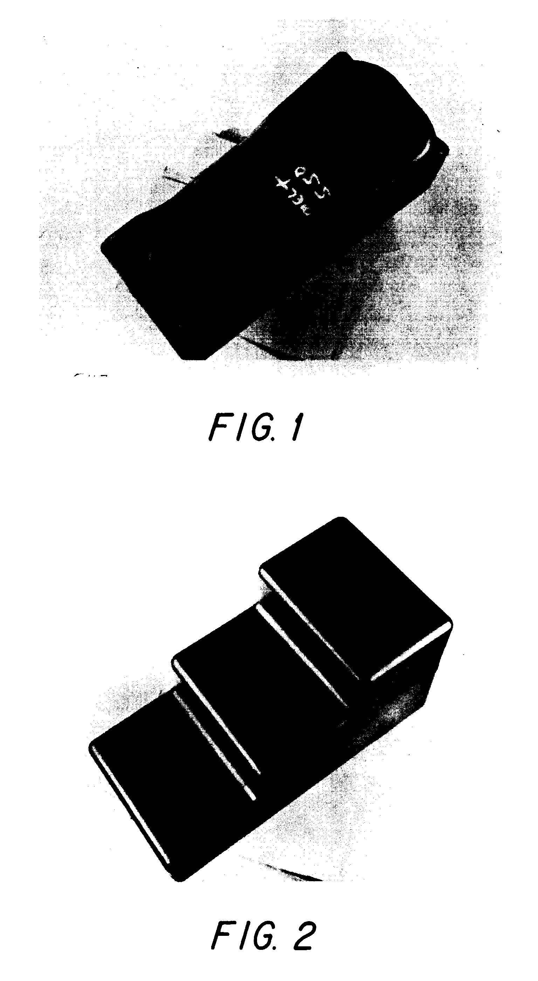

As observed by the data found in Table 1, comparison of samples 1-4 comprising either glass fiber or a platey filler, such as mica, to a control, sample 5, that has no reinforcement, illustrates the significant improvement in stiffness and strength with the addition of either the glass fiber or the platey filler. It was unexpectedly found that platey fillers such as, for example, mica not only had better surface appearance over the glass fiber re-inforced compositions but also had excellent blow ratios (compare the data for samples 1 and 3 to the data for samples 2 and 4). Molded parts made from compositions having the platey filler unexpectedly had excellent surface definition when molded into a step tool over the compositions having glass fiber re-inforcement, Figure 1 is a photograph of a molded part depicting the poor surface appearance and poor edge definition obtained with sample 3 containing about 8% by weight glass fiber re-inforcement in a PPE/polyamide composition. Figure 2 is a photograph of a molded part depicting the surprizing and dramatic excellent surface appearance and excellent edge definition obtained with sample 4 containing about 8% by weight mica re-inforcement in a PPE/polyamide composition. It is unexpected that the combined properties of good blow ratio, excellent surface appearance, and enhanced stiffness would all be obtained with the use of platey fillers in PPE/polamide compositions.

## Claims

1. A composition comprising:
(a) a poly(phenylene ether) resin;
(b) a polyamide resin;
(c) a compatibilizer for components (a) and (b); and
(d) an amount of a platey filler effective for providing a good blow ratio and an increased stiffness to the composition.

2. The composition of Claim 1, wherein the platey filler has a substantial number of particles that have a diameter to thickness ratio in the range of about 3:1 to about 25:1 and an average diameter of less than about 70 microns.

3. The composition of Claim 2, wherein the platey filler has a diameter to thickness ratio in the range of about 5:1 to about 20:1 and an average diameter of less than about 40 microns.

4. The composition of any preceding claim, wherein the platey filler is selected from the group consisting of talcs, micas, platey kaolins, glass flakes, calcium carbonates, calcium sulfates, wollastonites, microfibers, and whiskers.

5. The composition of any preceding claim, wherein the platey mineral filler is present from about 2% to about 50% by weight; based on the total weight of the entire composition.

6. The composition of Claim 5, wherein the platey mineral filler is present in an amount sufficient to result in a composition having a flexural modulus of at least about 450,000 psi.

7. The composition of Claim 5, wherein the platey mineral filler is present in an amount sufficient to increase the flexural modulus at least about 20% when compared to the same composition without an effective amount of the platey mineral filler.

8. The composition of Claim 1, wherein the compatibilizer is:
(A) at least one compound having both:
(i) a carbon-carbon double bond or a carbon-carbon triple bond and
(ii) a carboxylic acid, acid anhydride, acid amide, imido, carboxylic acid ester, epoxy, amino, hydroxyl or carboxylic acid ammonium salt;
(B) a non-polymeric carboxylic acid or a derivative of a non-polymeric carboxylic acid; or
(C) a compatibilizing poly(phenylene ether) resin.

9. The composition of Claim 1 further comprising an impact modifier present in an amount sufficient to improve the ductility of the composition.

10. The composition according to Claim 1, further comprising a flow promoter.

11. A method for making a thermoplastic resin composition compising: intimately admixing a poly(phenylene ether) resin, a polyamide resin, a compatibilizer for the poly(phenylene ether) resin and the polyamide resin, and an amount of a platey filler effective for providing a good blow ratio and an increased stiffness to the composition.

12. A method for improving the surface appearance of a thermoplastic resin composition compised of a poly(phenylene ether) resin, a polyamide resin, and a compatibilizer for the poly(phenylene ether) resin comprising adding an amount of a platey filler effective for providing a good blow ratio, an increased stiffness to the composition, and an excellent surface appearance.
